# EUROPÄISCHE PATENTSCHRIFT

(11) **EP 0 611 546 B1**
(45) Veröffentlichungstag und Bekanntmachung des Hinweises auf die Patenterteilung: **08.04.1998**
(21) Anmeldenummer: 94102293.1
(22) Anmeldetag: 15.02.1994
(51) Int. Cl.: A47L 9/28, A47L 9/04

(54) **Drehzahlgeregelte Staubsaugerdüse**
Rotation rate controlled vacuum nozzle brush
Brosse à rotation contrôlée pour buse d'aspirateur

(30) Priorität: 15.02.1993 DE 4304511
(43) Veröffentlichungstag der Anmeldung: 24.08.1994
(73) Patentinhaber: WESSEL-WERK GmbH & Co. KG, 51580 Reichshof (DE)
(72) Erfinder: Glatz, Dietmar, D-51515 Olpe (DE)
(74) Vertreter: Jaeger, Klaus, Dr.

(56) Entgegenhaltungen:
- EP-A- 0 372 903
- PATENT ABSTRACTS OF JAPAN vol. 14, no. 306 (C-0735)3. Juli 1990 & JP-A-02 102 629 (MITSUBISHI ELECTRIC CO) 16. April 1990
- PATENT ABSTRACTS OF JAPAN vol. 14, no. 306 (C-0735)3. Juli 1990 & JP-A-02 102 630 (MITSUBISHI ELECTRIC CO) 16. April 1990
- PATENT ABSTRACTS OF JAPAN vol. 14, no. 363 (C-746)(4306) 7. August 1990 & JP-A-02 131 734 (MITSUBISHI ELECTRIC CO) 21. Mai 1990

## Beschreibung

Die Erfindung betrifft eine Staubsaugerdüse nach dem Oberbegriff des Patentanspruchs 1.

Staubsaugerdüsen der hier in Rede stehenden Art, die häufig auch als aktive Staubsaugerdüsen bezeichnet werden, weisen ein bodenseitig zumindest bereichsweise offenes Gehäuse auf, in dem eine drehbar gelagerte Bürstenwalz so angeordnet ist, daß die Borsten nach unten, d.h. in Richtung des zu saugenden Bodens, die Bodenöffnung des Gehäuses durchgreifen. Um die Reinigungswirkung der Düse, die primär von der vom Staubsauger aufgebrachten durch die Düsenöffnungen wirkenden Saugleistung abhängt, zu verbessern, sind die aktiven Staubsaugerdüsen der eingangs genannten Art mit einem im Düsengehäuse angeordneten Elektromotor zum Antrieb der Bürstenwalze versehen. Dabei hängt die zusätzlich erzielbare Reinigungswirkung durch die drehbare Bürstenwalze insbesondere von der Drehzahl der Bürstenwalze ab. Bei bekannten gattungsgemäßen Staubsaugerdüsen ist daher die Drehzahl der Bürstenwalze regelbar, d.h. insbesondere auf einen konstanten möglichst hohen Wert einstellbar. Um eine derartige konstante Drehzahl zu erreichen, ist es dabei erforderlich, den die Bürstenwalze antreibenden Elektromotor entsprechend zu regeln.

Bei bekannten Staubsaugerdüsen der in Rede stehenden Art wird als Regelgröße die Drehzahl der Bürstenwalze unmittelbar verwendet. Mit anderen Worten, die Drehzahl der Bürstenwalze wird durch einen Aufnehmer ermittelt, dessen Signal in einer geeigneten elektronischen Auswerteeinheit in eine Stellgröße für den Elektromotor umgeformt wird. So wird beispielsweise bei einem Abfall der Drehzahl der Bürstenwalze die Leistungsaufnahme des Elektromotors erhöht, was wiederum zu einer Erhöhung der Drehzahl führt.

Als Drehzahldetektoren finden bei bekannten Staubsaugerdüsen induktive, kapazitive, optische und magnetische Aufnehmer, insbesondere Hall-Generatoren, Verwendung, die mit einem entsprechenden Gegenstück, beispielsweise einer Markierung oder einem Metallplättchen an der rotierenden Bürstenwalze zusammenwirken. Wenngleich diese Aufnehmer grundsätzlich eine zuverlässige Detektion der Drehzahl der Bürstenwalze ermöglichen, so weisen sie doch den Nachteil auf, daß sie gegen Verschmutzung, beispielsweise durch in den Spalt zwischen Aufnehmer und der Bürstenwalze eindringenden Staub, äußerst empfindlich reagieren. Insbesondere bei optischen, induktiven und kapazitiven Aufnehmern führt eine derartige Verschmutzung, wie sie jedoch gerade bei Staubsaugerdüsen bestimmungsgemäß kaum zu vermeiden ist, zu einem Totalausfall der Aufnehmer und damit zu einem Ausfall der Regelung.

Ausgehend von diesem Stand der Technik ist es die Aufgabe der vorliegenden Erfindung, eine Staubsaugerdüse der eingangs genannten Art zu schaffen, die eine zuverlässige Ermittlung und damit verbunden auch Regelung der Drehzahl der Bürstenwalze insbesondere auch beim Eindringen von Schmutz- und Staubpartikeln in den Bereich des Aufnehmers ermöglicht.

Diese Aufgabe wird durch eine Staubsaugerdüse nach der Lehre des Anspruchs 1 gelöst.

Vorteilhafte Ausgestaltungen der Erfindung sind Gegenstand der Unteransprüche.

Der Erfindung liegt zunächst einmal die Erkenntnis zugrunde, daß sämtliche sich drehenden Teile ein drehzahl- und/oder belastungsabhängiges Geräusch emittieren. So verändert sich beispielsweise das Laufgeräusch der Bürstenwalze mit zunehmender Drehzahl dergestalt, daß die Lautstärke ansteigt und gleichzeitig die Frequenz des abgegebenen Geräusches zunimmt. Mit anderen Worten, die Lautstärke und/oder die Frequenz des emittierten Geräusches sind in zuverlässiger Weise ein Maß für die anliegende Drehzahl.

Erfindungsgemäß weist die Staubsaugerdüse demzufolge als Aufnehmer einen elektroakustischen Aufnehmer, d.h. letztendlich ein Mikrofon, auf, der im Bereich mindestens einer ein drehzahl- und/oder belastungsabhängiges Geräusch emittierenden Quelle im oder am Gehäuse der Staubsaugerdüse angeordnet ist. Im Gegensatz zu den bekannten Aufnehmern, bei denen in jedem Fall ein Blickkontakt oder ein freier Luftspalt zwischen dem Aufnehmer und dem jeweiligen Gegenstück erforderlich ist, spielt es bei einem elektroakustischen Aufnehmer keine Rolle, ob sich Staub- oder Schmutzpartikel zwischen dem Aufnehmer und der zu messenden Quelle befinden, da die Schallemittierung räumlich und somit unabhängig von einem direkten linearen Kontakt zwischen Aufnehmer und Gegenteil ist. Um die Unempfindlichkeit gegen ein Verschmutzen und damit die Zuverlässigkeit der Messung weiter zu erhöhen, kann der elektroakustische Aufnehmer sogar außen am Gehäuse oder im Gehäuse gekapselt im Bereich der Schallquelle angeordnet sein.

Das vom Aufnehmer abgegebene elektrische Signal wird in an sich bekannter Weise in einer elektronischen Auswerteeinheit in eine Regelgröße für den die Bürstenwalze antreibenden Elektromotor umgesetzt. Dabei kann eine solche Umsetzung sowohl analog als auch digital erfolgen. Insbesondere kann in der elektronischen Auswerteeinheit das Signal des Aufnehmers mit einer zuvor experimentell bestimmten Eichkurve verglichen und so die tatsächliche aktuelle Drehzahl ermittelt werden. Dieser der aktuellen Drehzahl entsprechende ermittelte Wert kann dann entsprechend der Charakteristik des verwendeten Elektromotors in ein Signal für dessen Betrieb umgesetzt werden, beispielsweise eine Erhöhung oder Erniedrigung der Leistungsaufnahme bewirken, um dadurch wiederum die Drehzahl des Elektromotors und damit verbunden auch die Drehzahl der angetriebenen Bürstenwalze an die jeweiligen Betriebsbedingungen anzupassen.

In einfachster Weise kann der als Mikrofon wirkende elektroakustische Aufnehmer nur die Lautstärke der geräuschemittierenden Quelle ermitteln. Gemäß einem weiteren Ausführungsbeispiel der Erfindung jedoch kann neben oder anstelle der Lautstärke auch die Frequenz der Schallquelle ermittelt und als Regelgröße weiter verarbeitet werden.

Vorzugsweise ist der elektroakustische Aufnehmer gemäß der Erfindung im Bereich der Bürstenwalze selbst angeordnet und ermittelt dort unmittelbar die drehzahlabhängigen Lautstärkeschwankungen der Bürstenwalze als Maß für deren Drehzahl. Um jedoch die Verschmutzungsempfindlichkeit, die naturgemäß im Bereich der Bürstenwalze am größten ist, weiter zu verringern, ist vorzugsweise der elektroakustische Aufnehmer im Bereich des Elektromotors bzw. dessen Lüfters angeordnet und ermittelt dort deren drehzahlabhängige Lautstärkeschwankungen als mittelbare Führungsgröße. "Mittelbar" in diesem Zusammenhang bedeutet, daß die aufgenommenen drehzahlabhängigen Lautstärkeschwankungen des Elektromotors bzw. des Lüfter lediglich ein elektrisches Signal, das proportional zur Drehzahl des Elektromotors bzw. des Lüfters ist, liefern, das dann in der elektronischen Auswerteeinheit in Abhängigkeit von beispielsweise einer Getriebeübersetzung, eines möglichen Schlupfes und dergleichen in ein unmittelbares der Drehzahl der Bürstenwalze entsprechendes Signal umgewandelt wird.

Gemäß einem bevorzugten Ausführungsbeispiel der Erfindung sind mehrere elektroakustische Aufnehmer so im oder am Gehäuse der Staubsaugerdüse angeordnet, daß jeder der Aufnehmer jeweils eine geräuschemittierende Quelle überwacht, wobei die Signale sämtlicher Aufnehmer einer einzigen Auswerte- und Steuereinheit zugeführt werden. Bei einer derartigen Anordnung mehrerer elektroakustischer Aufnehmer werden gleichzeitig mehrere der Drehzahl der Bürstenwalze entsprechende Signale erhalten, die beispielsweise nach Umformung und Mittelwertbildung die Genauigkeit der Drehzahlmessung erhöhen. Weiter ist bei einer derartigen Anordnung die Empfindlichkeit gegen ein Verschmutzen der Drehzahlermittlung noch weiter verringert, da beispielsweise wenn ein Aufnehmer durch gröbste Verschmutzung tatsächlich ein nicht ganz zutreffendes Signal liefern sollte, dieses leicht im Vergleich zu den Signalen der übrigen Aufnehmer ermittelt und bei der Berechnung der Drehzahl unberücksichtigt bleiben kann. Weiter sind bei dieser Anordnung beispielsweise der Schlupf im Antrieb zwischen Bürstenwalze und Elektromotor ermittel- und damit berücksichtigbar.

Die ermittelten Signale der Aufnehmer werden erfindungsgemäß als Führungsgröße für die Regelung des die Bürstenwalze antreibenden Elektromotors verwendet. Gemäß einem weiteren Ausführungsbeispiel können die Signale der Aufnehmer bzw. die von der elektronischen Auswertevorrichtung umgeformten Signale als Führungsgrößen für weitere Funktionen der Staubsaugerdüse herangezogen werden. Beispielsweise kann bei einer erfindungsgemäßen Staubsaugerdüse vorgesehen sein, die Anstellung der Bürstenwalze relativ zum Boden in Abhängigkeit von verschiedenen Saugparametern, insbesondere dem zu saugenden Bodenmaterial, zu verändern. Eine derartige Anstellung kann dabei in einfacher Weise ebenfalls elektromtorisch durch Heben und Senken der Bürstenwalze im Gehäuse erfolgen. Nimmt nun beispielsweise, wenn die Staubsaugerdüse der Erfindung von einem glatten Boden auf einen hochflorigen Teppichboden bewegt wird, der Drehwiderstand auf die Bürstenwalze zu und damit deren Drehzahl ab, so kann erfindungsgemäß nicht nur die Drehzahl durch erhöhte Leistungszufuhr des Elektromotors erhöht werden, sondern auch die Bürstenwalze stärker vom Boden abgehoben werden. Dies führt letztendlich wieder zu einer Verringerung des Drehwiderstandes und damit einer Erhöhung der Drehzahl und/oder einer Verminderung der Belastung und damit der Leistungsaufnahme des Motors.

## Patentansprüche

1. Staubsaugerdüse mit einer in einem bodenseitig offenen Gehäuse angeordneten, mit Borsten versehenen und durch einen Elektromotor antreibbaren Bürstenwalze, deren Drehzahl in Abhängigkeit unterschiedlicher Saugparameter regelbar ist, wobei die Drehzahl der Bürstenwalze mittelbar oder unmittelbar durch mindestens einen Aufnehmer ermittelt und das Signal dieses Aufnehmers in einer elektronischen Auswerteeinheit in eine Regelgröße für den die Bürstenwalze antreibenden Elektromotor umgesetzt wird,
dadurch **gekennzeichnet**,
daß dieser Aufnehmer ein elektroakustischer Aufnehmer ist, der im Bereich mindestens einer ein drehzahl- und/oder belastungsabhängiges Geräusch emittierenden Quelle im oder am Gehäuse der Staubsaugerdüse angeordnet ist.

2. Staubsaugerdüse nach Anspruch 1,
dadurch **gekennzeichnet**,
daß der Aufnehmer die Lautstärke und/oder die Frequenz des emittierten Geräusches ermittelt.

3. Staubsaugerdüse nach Anspruch 1 oder 2,
dadurch **gekennzeichnet**,
daß der elektroakustische Aufnehmer unmittelbar die drehzahlabhängigen Lautstärkeschwankungen der Bürstenwalze ermittelt.

4. Staubsaugerdüse nach Anspruch 1 oder 2,
dadurch **gekennzeichnet**,
daß der elektroakustische Aufnehmer die drehzahlabhängigen Lautstärkeschwankungen des Elektromotors als mittelbare Führungsgröße ermittelt.

5. Staubsaugerdüse nach Anspruch 1 oder 2,
dadurch **gekennzeichnet**,
daß der elektroakustische Aufnehmer die drehzahlabhängigen Lautstärkeschwankungen eines Lüfters des Elektromotors als mittelbare Führungsgröße ermittelt.

6. Staubsaugerdüse einem der Ansprüche 1 bis 5,
dadurch **gekennzeichnet**,
daß mehrere elektroakustische Aufnehmer so im oder am Gehäuse der Staubsaugerdüse angeordnet sind, so daß jeder der Aufnehmer jeweils eine geräuschemittiernde Quelle überwacht, wobei die Signale sämtlicher Aufnehmer einer einzigen Auswerte- und Steuereinheit zugeführt werden.

7. Staubsaugerdüse nach einem der Ansprüche 1 bis 6,
dadurch **gekennzeichnet**,
daß die ermittelten Signale der Aufnehmer bzw. des Aufnehmers als Führungsgröße für weitere Funktionen der Staubsaugerdüse, insbesondere für die Anstellung der Bürstenwalze relativ zum Boden, verwendet werden.

## Claims

1. A vacuum cleaner nozzle having a brush roller disposed in a housing open at the bottom, said brush roller being provided with bristles and adapted to be driven by an electric motor, the speed of rotation of which is adapted to be regulated in dependence on different suction parameters, the speed of rotation of the brush roller being detected directly or indirectly by means of at least one sensor and the signal of said sensor being converted, in an electronic evaluating unit, to a control variable for the electric motor driving the brush roller, characterised in that said sensor is an electro-acoustic sensor, which is disposed in or on the vacuum cleaner nozzle housing in the region of at least one source emitting a speed-dependent and/or load-dependent noise.

2. A vacuum cleaner nozzle according to claim 1, characterised in that the sensor detects the volume and/or the frequency of the emitted noise.

3. A vacuum cleaner nozzle according to claim 1 or 2, characterised in that the electro-acoustic sensor directly detects the speed-dependent brush roller volume fluctuations.

4. A vacuum cleaner nozzle according to claim 1 or 2, characterised in that the electro-acoustic sensor detects the speed-dependent electric motor volume fluctuations as an indirect reference variable.

5. A vacuum cleaner nozzle according to claim 1 or 2, characterised in that the electro-acoustic sensor detects the speed-dependent volume fluctuations of a fan of the electric motor as an indirect reference value.

6. A vacuum cleaner nozzle according to any one of claims 1 to 5, characterised in that a plurality of electro-acoustic sensors are so disposed in or on the vacuum cleaner nozzle housing that each of the sensors respectively monitors a noise-emitting source, the signals of all the sensors being fed to a single evaluation and control unit.

7. A vacuum cleaner nozzle according to any one of claims 1 to 6, characterised in that the detected signals of the sensors or sensor are used as reference value for other functions of the vacuum cleaner nozzle, more particularly for the setting of the brush roller relatively to the floor.

## Revendications

1. Buse d'aspirateur avec une brosse cylindrique disposée dans un boîtier ouvert côté sol, munie de poils de brosserie et actionnable par l'intermédiaire d'un moteur électrique, brosse cylindrique dont la vitesse de rotation peut se régler en fonction de différents paramètres, la vitesse de rotation de la brosse cylindrique étant détectée indirectement ou directement par au moins un capteur et le signal de ce capteur étant converti, dans une unité d'évaluation électronique, en une valeur réglée pour le moteur électronique qui entraîne la brosse cylindrique, caractérisée en ce que ce capteur est un capteur électroacoustique qui est disposé dans la zone d'au moins une source émettant un bruit dépendant de la vitesse de rotation et/ou de la charge, dans ou sur le boîtier de la buse d'aspirateur.

2. Buse d'aspirateur selon la revendication 1, caractérisée en ce que le capteur détecte l'intensité sonore et/ou la fréquence du bruit émis.

3. Buse d'aspirateur selon les revendications 1 ou 2, caractérisée en ce que le capteur électroacoustique détecte directement les variations de volume de la brosse cylindrique qui dépendent de la vitesse de rotation.

4. Buse d'aspirateur selon les revendications 1 ou 2, caractérisée en ce que le capteur électroacoustique détecte les variations de volume du moteur électrique qui dépendent de la vitesse de rotation, en tant que grandeur de référence indirecte.

5. Buse d'aspirateur selon les revendications 1 ou 2, caractérisée en ce que le capteur électroacoustique détecte les variations de volume d'un ventilateur du moteur électrique qui dépendent de la vitesse de rotation, en tant que grandeur de référence indirecte.

6. Buse d'aspirateur selon l'une des revendications 1 à 5, caractérisée en ce que plusieurs capteurs électroacoustiques sont disposés dans ou sur le boîtier de la buse d'aspirateur de façon à ce que chacun des capteurs contrôle à chaque fois une source émettrice de bruit, les signaux de l'ensemble de tous les capteurs étant acheminés à une seule unité d'évaluation et de commande.

7. Buse d'aspirateur selon l'une des revendications 1 à 6, caractérisée en ce que les signaux des capteurs ou du capteur sont utilisés en tant que grandeur de référence pour des fonctions supplémentaires de la buse d'aspirateur et, en particulier pour l'incidence de la brosse cylindrique au sol.
